# EUROPEAN PATENT SPECIFICATION

(11) **EP 1 745 980 B1**
(45) Date of publication and mention of the grant of the patent: **15.06.2011**
(21) Application number: 05076687.2
(22) Date of filing: 21.07.2005
(51) Int. Cl.: B60P 3/00

(54) **Transport vehicle for sheet material**
Fahrzeug für den Transport von Materialplatten
Véhicule de transport de matériaux en plaque

(43) Date of publication of application: 24.01.2007
(60) Divisional application: 08168622.2
(73) Proprietor: Van Huët Glastransport B.V., 4004 JK Tiel (NL)
(72) Inventor: Emons, Johannes Martinus Christian, 6596 AB Milsbeek (NL)
(74) Representative: Winckels, Johannes Hubertus F.

(56) References cited:
- EP-A- 0 054 008
- DE-A1- 1 655 848
- DE-A1- 10 353 409
- FR-A- 2 342 865
- US-A- 3 516 706
- US-A- 3 655 218
- US-A- 5 209 540

## Description

The invention relates to a transport apparatus, configured to transport sheet material.

It is known to transport frangible sheet material, for example large glass panels such as float glass having dimensions of about 6x3 m (for example 6.0x3.21 m), using trailers having substantially vertically extending A-frames or L-frames. A disadvantage of such trailers is, that their cargo space is used only half their operational life, namely during the transport runs from the glass factory to distributors. The cargo space will be typically empty on each return leg.

It has been suggested, to improve the usability of glass transport trailers by providing a support structure that can be folded to a stored condition by hand, see for example US 5,209,540. However, a disadvantage of this known trailer is its relatively complex and time-consuming handlability. Moreover, the folded support structure uses up relatively much space, which leads to a reduction of the overall cargo loading capacity of the trailer. US 5,209,540 further shows that a relatively thick layer of plastic material is located between the glass sheets and the support structure to reduce damage to the sheets. However, the utilisation of such a protective layer reduces operational efficiency and loading capacity.

US 3,655,218 discloses an articulated flat bed trailer for transporting large, bulky objects such as ships propellers and the like, having a rotatable hinged portion.

US 3,516,706 relates to a freight vehicle body having decks that are movable to vertical out-of-the-way positions.

The present invention aims to overcome or alleviate the above-mentioned problems. In particular, the present invention aims to provide a relatively inexpensive multi-functional transport apparatus having a large cargo capacity, both when transporting large glass panels as well as during transportation of different cargo, wherein the transport apparatus preferably can be handled with relative ease, for example by a single person, wherein the transport apparatus preferably can provide at least a safe transport of large glass panels.

In an aspect of the invention, a transport apparatus at least includes: -a cargo space;
- at least one cargo support, the at least one cargo support defining at least part of a floor of the cargo space when the support is in a first, substantially horizontal, position, wherein each cargo support is moveable between the first position and a second position,
   wherein the apparatus is characterised by the at least one support extending in the cargo space, spaced a certain vertical distance away from the level of said first position, when the support is in its second position; and
- an actuation mechanism which is constructed to move the at least one cargo support between the first and second position.

For example, the transport apparatus can be, or can be at least part of, a vehicle, a truck and/or trailer.

When the at least one cargo support is in the first, substantially horizontal, position, it defines at least part of a cargo floor. In that case, various types of cargo can be placed into the cargo space, to be transported by the transport apparatus. Besides, the at least one cargo support can simply support at least part of the cargo.

When the actuation mechanism has moved the at least one support to its second position, the cargo support extends for example substantially vertically in the cargo space, spaced a certain vertical distance away from the level of said first position. Then, large panels, for example glass sheets, can be positioned next to said at least one cargo support, to be at least partly supported thereby during transport. Since the at least one cargo support is spaced a certain vertical distance away from the level of said first position, the cargo support can support cargo stably at a relatively high position in the cargo space. This is particularly advantageous when large frangible float glass panels are to be transported in the cargo space. Besides, the loading and unloading of sheet material can be achieved relatively fast with the apparatus according to the present invention.

In this patent application, the term "extending substantially vertically" has to be construed broadly, since this term can also mean "extending under some small angle with respect to a vertical plane".

Therefore, the at least one cargo support can provide a cargo support both in its first, substantially horizontal, position and in its second, for example substantially vertical, position. Thus, available space is used efficiently in both instances.

The actuation mechanism to move the at least one cargo support between the first and second position can be constructed in various ways. In one embodiment of the invention, this actuation mechanism comprises at least one frame which is moveable between a first position below the cargo space and a second position wherein at least part of the frame extends into the cargo space. The frame can hold the cargo support firmly in a desired position. Several of such frames can be provided to move and hold the at least one cargo support, for example a row of spaced-apart, elongated, moveable frames.

In an aspect of the invention, each moveable frame extends substantially parallel to a longitudinal direction of the cargo space when that frame is in the first position. In that case, the frame can be stored in a relatively small space below the cargo space, so that the transport apparatus can provide a relatively large, or an unrestricted, cargo space. Still, said moveable frame can be of a desired length to hold said cargo support at a desired height in the cargo space.

In a further embodiment of the invention, each said frame is simply pivotal, about a respective first pivot axis, between the respective first and second position. Also, the at least one cargo support can be pivotally connected, for example about a respective second pivot axis and an optional third pivot axis, to or near an end of said moveable frame. Thus, the moveable frame(s) and cargo support(s) can take up little space in their first positions, particularly measured in a transversal direction of the cargo space, whereas said cargo support can be brought to a relatively high second position by said moveable frame in a simple manner.

The space that can be required for the movements of the least one frame and cargo support, can be particularly compact for the case that the pivotal connection between said cargo support and said moveable frame is provided by a number of second pivot axes and a number of third pivot axis, each said second pivot axis extending substantially parallel with respect to said first pivot axis and each third pivot axis extending substantially transversally with respect to said first pivot axis. Also, preferably, each said first pivot axis extends substantially transversally with respect to a longitudinal direction of the cargo space.

In an aspect of the invention, said actuation mechanism includes only one hydraulic piston/cylinder-assembly which is coupled to said at least one cargo support to move the support. In that case, the actuation mechanism can be relatively durable, easy to handle. As an example, the hydraulic piston/cylinder-assembly can simply be coupled to said cargo support via said optional, at least one moveable frame. In the latter case, the hydraulic piston/cylinder-assembly can be configured to move the at least one frame between its first and second position, wherein the movement of the frame preferably automatically results in the cargo support moving between its first and second position respectively.

In an embodiment, a lower end of the at least one cargo support extends at least 1 m above the level of said first position when that support is in its second position. In that case, the cargo support can reach relatively high positions, viewed from said first position of the cargo support, so that the cargo support can support relatively high cargo elements, for example glass panels, relatively stable. As an example only, a top end of the at least one support can be located at about 2-3 meters above said first position of the cargo support when that support is in its second position, depending on the dimensions of the support.

In an aspect of the invention, said at least one cargo support extends substantially parallel to a longitudinal direction of the cargo space when that support is in its second position. Thus, relatively lengthy cargo panels can be supported in the cargo space, which is particularly advantageous when the transport apparatus is at least part of a vehicle, a truck and/or trailer.

Also, at least part of said actuation mechanism can be covered by said cargo support when that support is in its first position, for example to protect that mechanism.

In an embodiment, the apparatus can comprise at least one moveable floor member, being moveable between a floor position and a substantially vertical position, wherein the floor member extends substantially transversally with respect to the longitudinal direction of the cargo space when that floor member is in said substantially vertical position. For example, such floor member can act as a stopping member for supporting cargo, said cargo support(s) and/or one or more parts of said actuation mechanism when that floor member is in its substantially vertical position. Also, said moveable floor member can cover at least part of said actuation mechanism when the at least one cargo support is in its first position. Such a moveable floor member does not necessarily have to be a said cargo support.

In a further embodiment of the invention, the apparatus includes a covering which is arranged to cover said cargo space, wherein the covering is preferably at least partly removable by hand by a single person. Such covering can be constructed in various ways, and include, for example, one or more doors, a removable covering sheet and/or a different type of covering.

Also, the apparatus can include pressing means for pressing cargo, for example float glass panels, towards said at least one cargo support when that support is in its second position, wherein the pressing means are preferably manually operable by a single person. Such pressing means can also be constructed in various ways, and include one or more pressing members of about 10-20 kg each that are controllable by tension ropes, and/or differently.

The present invention further provides the use of a transport apparatus according to the invention, wherein during a first period of use the at least one cargo support has been moved to its second position to directly or indirectly support panel shaped cargo, for example float glass, wherein -during a second period of use- the at least one cargo support has been moved to its first position to provide a substantially horizontal cargo space floor to support cargo.

Therefore, the cargo space can be used optimally, wherein a large cargo space is available to transport cargo when the at least one cargo support is in its first position. Also, the invention provides a method for transporting cargo, for example float glass, using a transport apparatus according to the invention. This provides at least a number of the above-mentioned advantages.

Embodiments of the invention will now be described, by way of example only, with reference to the accompanying schematic drawings in which corresponding reference symbols indicate corresponding parts, and in which:
figure 1 schematically depicts a side view of an embodiment according to the invention;
figure 2 depicts part of the trailer of the embodiment of fig. 1;
figure 3 depicts a cross-section over line III-III of fig 2;
figure 4 depicts a perspective view of part of the trailer shown in fig. 2, wherein the support members are in the second position;
figure 5 is similar to figure 4 and shows the support members in the first position;
fig. 6 schematically depicts a cross-section of a further embodiment according to the invention, wherein the lifting members are in the lower position; and
fig. 7 is similar to fig. 6, showing the lifting members in an upper position.

Values accompanied by terms such as 'about', 'circa', 'substantially' or similar terms should at least be construed as meaning the range from the mentioned value minus 10% of that value to the mentioned value plus 10% of that value.

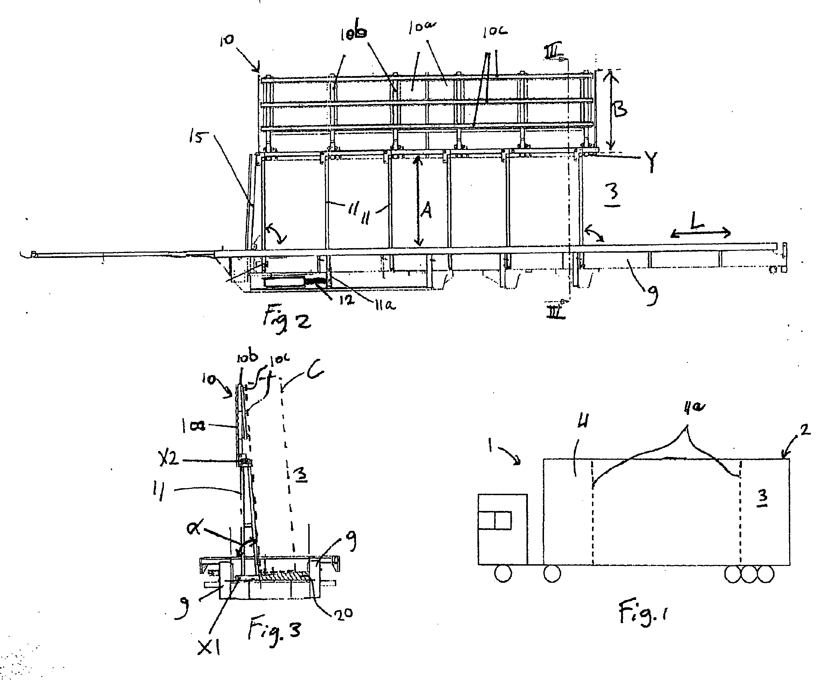

Figure 1 schematically shows a transport apparatus, for example to transport sheet material. The transport apparatus 1 includes a trailer 2, comprising a cargo space 3 and a base frame which includes two parallel longitudinal chassis bars 9. Details of the cargo space 3 are shown in figures 2-5. In the present embodiment, a storage space is provided between the two chassis bars 9, as will be explained below.

As is shown in fig. 1, the cargo space can be provided with a covering 4, for example, side walls and/or a roof, a tarpaulin, and/or the like. The cargo space 3 can be reached from the outside, for example, by removing or opening at least part the covering, for example via a door or side entrance which is schematically depicted with broken lines 4a. Preferably, the covering is at least partly removable by hand by a single person. In an alternative embodiment, the cargo space is not provided with a covering.

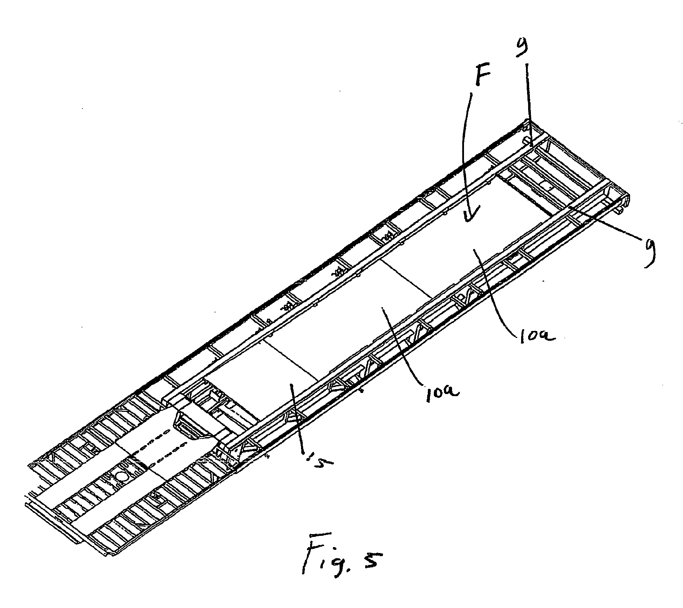

As is shown in figures 2 and 3, the transport apparatus includes cargo support members 10. Each support member 10 is moveable between a first position (shown in fig. 5) wherein part of the support member 10 defines at least part of a floor F of the cargo space 3, and a second position (shown in figures 2-4) wherein each support member 10 extends substantially vertically in the cargo space 3, spaced a certain vertical distance away from the level of said first position. In the present embodiment, the cargo support members 10 extend substantially parallel to a longitudinal direction of the cargo space when the support members are in their second positions (see figures 2-4).

Also, the transport apparatus 1 includes an actuation mechanism which is constructed to move the support members 10 automatically between the first and second position. Sheet-like cargo C, which is being supported in the cargo space 3, is schematically depicted in figure 3 by broken lines C. As is shown in fig. 5, in the present embodiment, the cargo support members 10 can extend substantially between the chassis bars 9 when the cargo support members are in the first position. In that case, the storage space between the chassis bars 9 is substantially covered by the support members 10. Preferably, the support members 10 can be supported directly by said base frame, for example by said longitudinal chassis bars 9, when the support members 10 are in the first position, to provide a sturdy cargo support. This can be achieved in various ways, for example by the chassis bars 9 having supporting grooves and/or supporting flanges to support parts of the support members 10.

The said cargo support members 10 can be arranged in various ways. In the present embodiment, the cargo support members are provided by floor parts 10a, which provide part of the cargo space floor F when the support members 10 are in the first position. The floor parts 10a are connected to a number of transversal support rods 10b. These transversal support rods are provided with longitudinal cargo support rods 10c, on sides faced away from the floor parts 10a. The longitudinal support rods 10c can function as cargo supports, for example to directly or indirectly support a side of a load of sheet cargo C when the cargo support members 10 are in the second position. Also, trailer 2 is provided with a number of lower support members 20, for example two, to support the underside of the sheet cargo C, when the cargo C is positioned substantially vertically, against the upwardly extending support member 10. In the present embodiment, said lower supports 20 are located on the bottom of the storage space between the chassis bars 9 (see fig. 3).

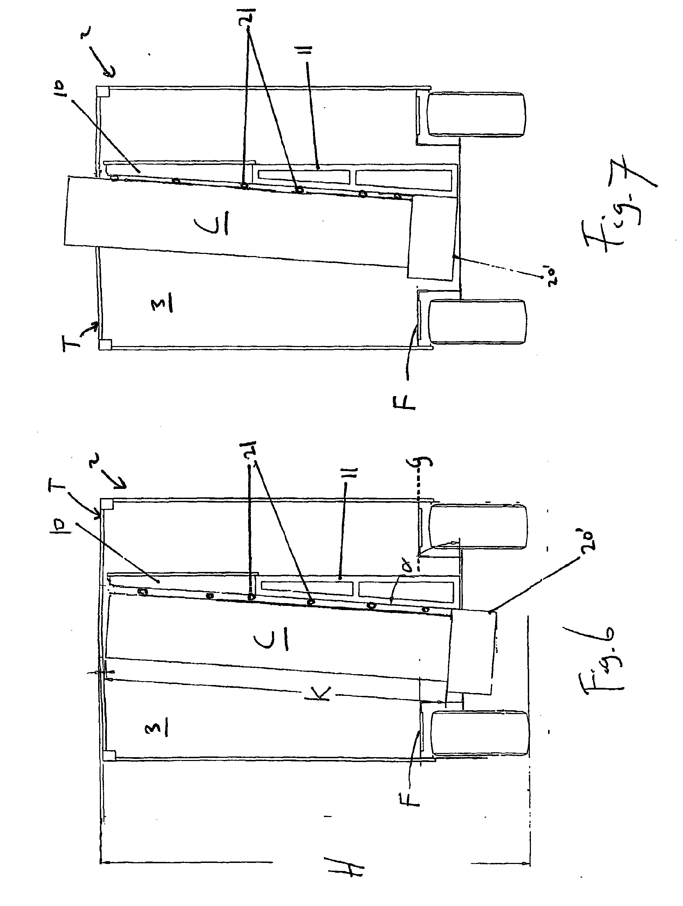

Preferably, the cargo supports, which include said cargo support members 10 and said lower cargo supports 20, are arranged to hold sheet-like cargo C substantially vertically, such, that a supported side of the cargo C, which is supported by said cargo support members 10 when in their second position, encloses an angles α with a horizontal plane in the range of about 80-90°, see fig. 3 or fig. 6. Preferably, the cargo support members 10 have cargo contacting/supporting surfaces that prevent damaging of the cargo C during use. To this aim, such supporting surfaces can include various materials and/of shapes, as will be clear to the skilled person. Also, as is indicated in the embodiment of Fig. 6-7, the cargo support members can be provided with cargo supporting wheels or rollers 21 or suchlike, which contact the cargo C during use. The cargo support members 10 can also be constructed differently. For example, the cargo support members 10 can be arranged to support the cargo directly, such as shown in the figures, or indirectly such as is the case when further intermediate supports (not shown) are placed between the cargo support members 10 and the cargo C after the cargo support members 10 have been moved to their respective second positions. Such intermediate supports can be arranged in various ways, for example as removable elongated supporting bars, and can also be provided with cargo supporting wheels or rollers.

In the present embodiment, said actuation mechanism comprises a plurality of elongated frames 11 that are moveable between a first position below the cargo space 3, where they extend in the storage space provided between the opposite sides of the chassis bars 9 , and a second position wherein the frames 11 extend substantially vertically into the cargo space 3. The frames 11 are spaced-apart from each other, and they are arranged in a row. The frames 11 can be moveably coupled, for example, to said trailer base frame. In fig. 5, the elongated frames 11 are in their first positions, whereas the second position of the frames is shown in figures 2-4. Preferably, in their second positions, the frames 11 can also provide cargo support surfaces which can support a side of sheet-like cargo C, as is depicted in fig. 3. For example, to this aim, the respective support surfaces of the moveable frames 11 and the support surfaces of the longitudinal rods 10c of the supports members 10 preferably extend in the same substantially vertical plane, or in line with each other. In the present embodiment, at least part of said actuation mechanism, which includes a number of said elongated frames 11, is being covered by said support members 10 when the support members 10 are in their first positions.

Each moveable frame 11 can be constructed in various ways, as will be clear to the skilled person. For example, each frame can include two longitudinal frame rods and a number of transversal interconnecting frame rods. In the present embodiment, each moveable elongated frame 11 extends substantially parallel to longitudinal directions L of the cargo space 3 when that frame 11 is in the first position. Also, in the present embodiment, each said elongated frame 11 is pivotal, about a respective first pivot axis X1, between the respective first and second position. Each first pivot axis X1 is transversal to the longitudinal direction L of the cargo space (see figs. 2 and 3).

Besides, in the present embodiment, said support members 10 are pivotally connected, about respective second pivot axes X2 and third pivot axes Y, to the distal ends of said moveable frames 10. In the present embodiment, each said second pivot axis X2 extends substantially parallel with respect to the first pivot axes X1, and each said third pivot axis Y extends substantially transversally with respect to said first pivot axis X1 and second pivot axis X2.

The actuation mechanism can include, for example, a hydraulic piston/cylinder-assembly 12, preferably just one. This assembly 12 can be coupled to the support members 10, particularly via the elongated frames 11. During use, the piston/cylinder assembly 12 can swivel the elongated frames about the pivot axes X1 between their first and second positions, wherein the motion of these frames preferably automatically leads to the pivoting of the support members about the respective second and third pivot axes X2, Y. For example, a conversion mechanism can be provided to convert a piston/cylinder-movement into a pivoting movement of the elongated frames 11, and to pivot the support members 10 as a consequence of the pivoting motion of the elongated frames 11. To the skilled person, it will be clear how such a conversion mechanism can be arranged. As an example, such a conversion mechanism can include suitable motion conversion bars, stop members, gear transmissions, cam followers and/or similar or different means. In the present embodiment, the piston of the piston/cylinder-assembly 12 simply cooperates with a lower extended part 11a of one of the frames 11 to swivel the frames between the first and second positions. The actuation mechanism can also be constructed differently, and can include for example one or more electromotor driven spindles, gear mechanisms or by other mechanisms instead of hydraulic actuation means.

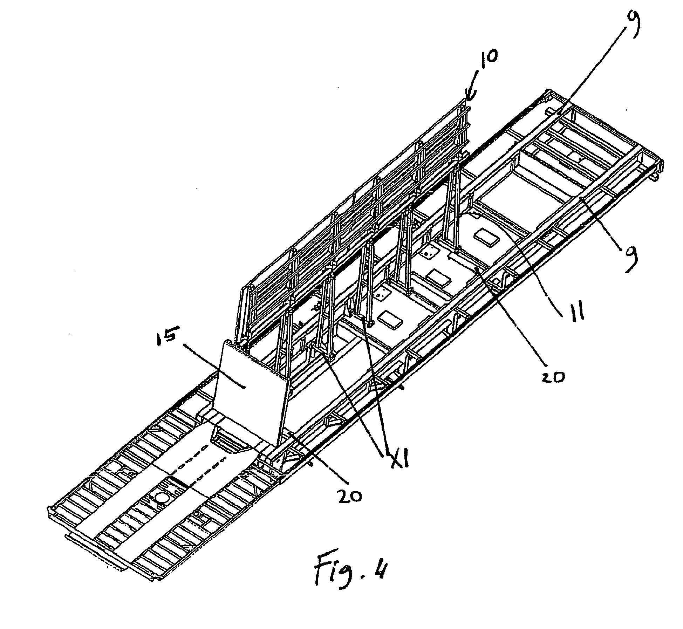

Also, the present trailer-embodiment comprises a moveable floor member 15 which can cover part of the actuation mechanism when the at least one cargo support member is in its first position. In the present embodiment, this moveable floor member 15 is arranged to cover a first elongated frame 11 of the row of elongated moveable frames 11. As is shown in figures 2 and 4, said moveable floor member 15 can be moved to a substantially vertical position wherein the floor member extends substantially transversally with respect to the longitudinal direction of the cargo space. Preferably, said actuation mechanism is arranged to provide such a movement of the moveable floor member 15. In its substantially vertical position, the floor member 15 preferably acts as a stopping member for supporting the adjoining support member 10 and first elongated frame member 11, to provide a certain fixation of the support members 10 and elongated frame members 11. Also, preferably, in the substantial vertical position, the floor member 15 acts as a stopping member for stopping/supporting cargo such as large glass plates C.

Also, the transport apparatus can include pressing means for pressing cargo, for example float glass panels, towards the at least one support member when that member is in its second position, wherein the pressing means are preferably manually operable by a single person. Such pressing means are not shown in the figures.

The transport apparatus can have various dimensions. For the case that relatively large panels are the be transported in the cargo space, for examples panels of about 6 m long and 3 m wide, it is advantageous when the lower ends of the support members 10 extend at least 1 m above the level of said first position when the members 10 are in the second positions. This distance is shown in figure 2 by double arrow A. For example, this distance A can be about 1.5 or 1.6 m, or an other suitable distance. Also, preferably, the overall length of the support members, measured along the length of the cargo space, is at least about 5 or 6 m.

Besides, preferably, a horizontal width of the cargo space preferably is not larger than about 2 to 2.5 meters. Thus, the transport apparatus can be relatively compact.

As an example, the support members 10 can have a width B (see fig. 2) of no more than about 2 meters, measured in a transversal direction of the cargo space when the support members 10 are in their first positions. For example, the width B of the support members (or the distance between the two chassis bars 9) can be about 1.4-1.5 m.

Besides, as an example, the length of each of the elongated frames 11 can be in the range of about 1-2 meters. For example, each elongated frame 11 can have a length of about 1.9 to 2 m.

Also, the transport apparatus, or parts thereof, can be dimensioned differently.

During use, the support members 10 can be moved by the actuation mechanism 11, 12 to their second positions to provide a firm and steady support to panel shaped cargo C, for example float glass, which cargo C is placed onto the two lower supports 20. Preferably, in that case, a lower side of the cargo C can extend below the regular cargo space 3, namely in the compartment between the chassis bars 9 (see fig. 3). Besides, the support members 10 can be brought to the first positions to provide a substantially horizontal cargo space floor, and to support various types of cargo. In the latter case, the actuation mechanism, particularly, the elongated frames 11, can extend below the cargo space, between the chassis bars 9, and take up little space.

Figures 6 and 7 show a further embodiment of the invention. This embodiment differs from the embodiment shown in figures 1-5 in that the lower support members 20' are lifting supports, which are not only configured to support the underside of the sheet material cargo C, but also to lift the cargo C between various vertical positions. As is shown in figure 6, when the lifting support members 20' are in a lower position, a lower part of the cargo C can be located below the vertical level G of the regular cargo space floor F, for example at a position between trailer base frame parts, such as said chassis bars (not shown in fig. 6, 7). In this way, relatively high sheet material cargo C, having height K, can still be transported within the trailer 2, while the overall height H of the trailer 2 can be kept within certain practical limits. Also, in this way, trailer stability during transport can be improved due to a resulting relatively low centre of gravity. For example, the height K of the sheet material can be about 3 m, whereas the maximum height of the trailer H can be circa 4 m.

To facilitate handling of the cargo C, particularly during loading/unloading thereof, the cargo C can be lifted upwardly by the lifting supports 20', for example such that the lower part of the cargo C is located at or above the level G of the regular cargo space floor F, and/or such that the lower part of the cargo C is located at or above the trailer base frame. Figure 7 shows an upper position of the lifting support members 20'. The substantial vertical movement of these members 20' can be achieved in various ways, for example by one or more hydraulic actuators, spindle mechanism driven by one or more electric motors, or by other moving mechanisms. Rollers or wheels 21 are preferably provided as cargo supporting parts of the substantially vertically extending frames 11 and the support members 10, to allow a substantially friction free, or low friction, substantial vertical movement of the cargo along to the frames 11 and support members. It will be clear to the skilled person, that such rollers or wheels 21 can be arranged in various ways, and that they can be coupled in various ways to the frames 11 and/or support members 10, such as detachably or fixed.

In the present embodiment of Fig. 6, 7, when the lifting support members 20' are in the upper position, relatively high cargo C may extend partly above a top side T of the trailer 2. For example, the covering of the trailer can be at least partly removed to allow the cargo C to reach out of the trailer 2. When the lifting support members 20' are in the upper positions (Fig. 7), cargo can be removed therefrom, or be positioned therein, using suitable conveying means, for example a gripper, crane and/or the like. Such conveying means can reach the cargo C, for example, via a roof opening and/or side opening of the trailer covering.

While specific embodiments of the invention have been described above, it will be appreciated that the invention may be practiced otherwise than as described. The descriptions above are intended to be illustrative, not limiting. Thus, it will be apparent to one skilled in the art that modifications may be made to the invention as described without departing from the scope of the claims set out below.

## Claims

1. A transport apparatus, configured to transport sheet material, at least including:
- a cargo space (3);
- at least one cargo support (10), the at least one cargo support defining at least part of a floor (F) of the cargo space when the support is in a first, substantially horizontal, position,
wherein said at least one cargo support is moveable between the first position and a second position,
**characterised by** the at least one support extending in the cargo space (3), spaced a certain vertical distance away from the level of said first position when the support (10) is in its second position; and
- an actuation mechanism (11, 12) which is constructed to automatically move the at least one cargo support between the first and second position.

2. A transport apparatus according to claim 1, wherein said actuation mechanism comprises at least one frame (11) which is moveable between a first position below the cargo space (3) and a second position wherein at least part of the frame extends into the cargo space.

3. A transport apparatus according to claim 2, wherein each moveable frame (11) extends substantially parallel to a longitudinal direction (L) of the cargo space when that frame (11) is in the first position.

4. A transport apparatus according to claim 2 or 3, wherein each said moveable frame (11) is pivotal, about a respective first pivot axis (X1), between the respective first and second position.

5. A transport apparatus according to any of claims 2-4, wherein said at least one cargo support (10) is pivotally connected to or near an end of said moveable frame (11).

6. A transport apparatus according to claim 5, wherein the pivotal connection between each said cargo support (10) and said moveable frame (11) is provided by a second pivot axis (X2), each said second pivot axis extending substantially parallel with respect to said first pivot axis (X1), wherein preferably the pivotal connection between each said cargo support (10) and said moveable frame (11) is also provided by a third pivot axis (X3), each said each third pivot axis extending substantially transversally with respect to the said first pivot axis.

7. A transport apparatus according to any of claims 2-6, wherein each moveable frame (11) includes a support surface which extends substantially in line with a support surface of said cargo support (10) when the cargo support (10) and the moveable frame (11) are in their second positions.

8. A transport apparatus according to any of the preceding claims, wherein said actuation mechanism includes only one piston/cylinder-assembly (12) to move said at least one cargo support (10) between said first and second position.

9. A transport apparatus according to any of the preceding claims, wherein a lower end of the at least one cargo support (10) extends at least 1 m above the level of said first position of that support (10) when that support (10) is in its second position.

10. A transport apparatus according to any of the preceding claims, wherein said at least one cargo support (10) extends substantially parallel to a longitudinal direction (L) of the cargo space when the cargo support is in its second position.

11. A transport apparatus according to any of the preceding claims, wherein at least part of said actuation mechanism (11, 12) is being covered by said cargo support (10) when that support is in its first position.

12. A transport apparatus according to any of the preceding claims, comprising at least one moveable floor member (15), being moveable between a floor position and a substantially vertical position, wherein the floor member preferably extends substantially transversally with respect to the longitudinal direction of the cargo space when that floor member (15) is in said substantially vertical position.

13. A transport apparatus according to claim 12, wherein said moveable floor member (15) is arranged to act as a stopping member for supporting cargo, said cargo support(s) and/or one or more parts of said actuation mechanism when that floor member (15) is in its substantially vertical position.

14. A transport apparatus according to any of the preceding claims, wherein said at least one cargo support (10) extends substantially vertically in the cargo space (3) when that support (10) is in said second position.

15. A transport apparatus according to any of the preceding claims, including one or more lifting supports (20') which are configured to support the underside of sheet material (C), particularly when that material is at least being supported at and/or near an upper by said at least one cargo support (10) when that cargo support is in its second position, wherein the one or more lifting supports (20') are configured to move the sheet material (C) between at least a first vertical position and a second vertical position, for example between a lower transport position and an upper loading/unloading position.

16. A transport apparatus according to any of the preceding claims, including a covering which is arranged to cover said cargo space, wherein the covering is preferably at least partly removable by hand by a single person.

17. A transport apparatus according to any of the preceding claims, wherein said cargo support member (10) extends substantially between two parallel chassis bars (9) of a base frame of the transport apparatus when the support member (10) is in the first position, wherein preferably a storage space is provided between said chassis bars (9), for example a storage space for storing at least part (11) of said actuation mechanism or for holding a lower part of sheet cargo (C) during use.

18. The apparatus according to any of the preceding claims wherein panels, for example glass sheets, can be positioned next to said at least one cargo support, to be at least partly supported thereby during transport, when the support is in its second position.

19. Use of a transport apparatus according to any of the preceding claims, wherein during a first period of use the at least one cargo support has been moved automatically to its second position to directly or indirectly support panel shaped cargo, for example float glass, wherein -during a second period of use- the at least one cargo support has been moved automatically to its first position to provide a substantially horizontal cargo space floor to support cargo.

20. Method for transporting cargo, for example float glass, using a transport apparatus according to any of claims 1-18.

## Patentansprüche

1. Transportvorrichtung, die konfiguriert ist, um Platten- bzw. Tafelmaterial zu transportieren, wenigstens enthaltend:
einen Frachtraum (3);
wenigstens einen Frachtständer bzw. eine Frachtabstützung (10), wobei der wenigstens eine Frachtständer bzw. Frachtabstützung wenigstens einen Teil eines Bodens (F) des Frachtraum definiert, wenn der Ständer bzw. die Abstützung in einer ersten, im Wesentlichen horizontalen Position ist,
wobei der wenigstens eine Frachtständer bzw. Frachtabstützung zwischen der ersten Position und einer zweiten Position bewegbar ist,
**gekennzeichnet durch** den wenigstens einen Ständer bzw, eine Abstützung, der bzw. die sich in dem Frachtraum (3) erstreckt, und zwar beabstandet in einem bestimmten vertikalen Abstand entfernt von der Ebene bzw. dem Niveau der ersten Position, wenn der Ständer bzw, die Abstützung (10) in ihrer zweiten Position ist; und einen Betätigungsmechanismus (11, 12), welcher ausgebildet ist, um automatisch den wenigstens einen Frachtständer bzw. Frachtabstützung zwischen der ersten und der zweiten Position zu bewegen.

2. Transportvorrichtung gemäß Anspruch 1, wobei der Betätigungsmechanismus wenigstens einen Rahmen bzw. ein Gerüst (11) aufweist, welcher bzw. welches zwischen einer ersten Position unterhalb des Frachtraums (3) und einer zweiten Position, wobei sich wenigstens ein Teil des Rahmens bzw. Gerüsts in den Frachtraum erstreckt, bewegbar ist,

3. Transportvorrichtung gemäß Anspruch 2, wobei sich jeder bewegbare Rahmen bzw. Gerüst (11) im Wesentlichen parallel zu einer longitudinalen bzw. Längsrichtung (L) des Frachtraums erstreckt, wenn der Rahmen bzw. das Gerüst (11) in der ersten Position ist.

4. Transportvorrichtung gemäß Anspruch 2 oder 3, wobei jeder besagte bewegbare Rahmen bzw. Gerüst (11) um eine jeweilige erste Schwenkachse (X1) zwischen der jeweiligen ersten und zweiten Position schwenkbar ist.

5. Transportvorrichtung gemäß irgendeinem der Ansprüche 2 bis 4, wobei der besagte wenigstens eine Frachtständer bzw. Frachtabstützung (10) schwenkbar verbunden an oder nahe einem Ende des bewegbaren Rahmens bzw. Gerüsts (11) ist.

6. Transportvorrichtung gemäß Anspruch 5, wobei die Schwenkverbindung zwischen jedem besagten Frachtständer bzw. Frachtabstützung (10) und besagten bewegbaren Rahmen bzw. Gerüst (11) durch eine zweite Schwenkachse (X2) vorgesehen ist, wobei sich jede besagte zweite Schwenkachse im Wesentlichen parallel in Bezug auf die besagte erste Schwenkachse (X1) erstreckt, wobei bevorzugt die Schwenkverbindung zwischen jedem besagten Frachtständer bzw. Frachtabstützung (10) und besagten bewegbaren Rahmen bzw. Gerüst (11) ferner durch eine dritte Schwenkachse (X3) vorgesehen ist, wobei sich jede der besagten jeweils dritten Schwenkachse im Wesentlichen quer in Bezug auf die besagte erste Schwenkachse erstreckt.

7. Transportvorrichtung gemäß irgendeinem der Ansprüche 2 bis 6, wobei jeder bewegbare Rahmen bzw. Gerüsts (11) eine Stütz- bzw. Tragoberfläche enthält, welche sich im Wesentlichen in Übereinstimmung mit einer Stütz- bzw. Tragoberfläche des besagten Frachtständers bzw. Frachtabstützung (10) erstreckt, wenn der Frachtständer bzw. Frachtabstützung (10) und der bewegbare Rahmen bzw. Gerüst (11) in ihren zweiten Positionen sind.

8. Transportvorrichtung gemäß irgendeinem der vorhergehenden Ansprüche, wobei der Betätigungsmechanismus nur eine Kolben/Zylinder-Baugruppe (12) enthält, um den wenigstens einen Frachtständer bzw. Frachtabstützung (10) zwischen der ersten und der zweiten Position zu bewegen.

9. Transportvorrichtung gemäß irgendeinem der vorhergehenden Ansprüche, wobei ein unteres Ende des wenigstens einen Frachtständers bzw. Frachtabstützung (10) sich wenigstens 1 m oberhalb der Ebene bzw. des Niveau der besagten ersten Position des Ständers bzw. der Abstützung (10) erstreckt, wenn der Ständer bzw. die Abstützung (10) in seiner bzw. ihrer zweiten Position ist.

10. Transportvorrichtung gemäß irgendeinem der vorhergehenden Ansprüche, wobei sich der wenigstens eine Frachtständer bzw. Frachtabstützung (10) im Wesentlichen parallel zu einer longitudinalen bzw. Längsrichtung (L) des Frachtraums erstreckt, wenn der Frachtständer bzw. die Frachtabstützung in seiner bzw. ihrer zweiten Position ist.

11. Transportvorrichtung gemäß irgendeinem der vorhergehenden Ansprüche, wobei wenigstens ein Teil des Betätigungsmechanismuses (11, 12) durch den Frachtständer bzw. die Frachtabstützung (10) abgedeckt ist, wenn der Ständer bzw. die Abstützung in seiner bzw. ihrer ersten Position ist.

12. Transportvorrichtung gemäß irgendeinem der vorhergehenden Ansprüche, aufweisend wenigstens ein bewegbares Bodenglied (15), das zwischen einer Bodenposition und einer im Wesentlichen vertikalen Position bewegbar ist, wobei sich das Bodenglied bevorzugt im Wesentlichen quer in Bezug zu der longitudinalen bzw. Längsrichtung des Frachtraum erstreckt, wenn das Bodenglied (15) in besagter im Wesentlichen vertikalen Position ist.

13. Transportvorrichtung gemäß Anspruch 12, wobei das bewegbare Bodenglied (15) angeordnet ist, um als ein Anschlag- bzw. Sperrglied zum Stützen bzw. Tragen der Fracht, des Frachtständers bzw. der Frachtständer bzw. Frachtabstützung (en) und/oder eines oder mehrerer Teile des Betätigungsmechanismuses zu wirken, wenn das Bodenglied (15) in seiner im Wesentlichen vertikalen Position ist.

14. Transportvorrichtung gemäß einem der vorhergehenden Ansprüche, wobei sich der wenigstens eine Frachtständer bzw. Frachtabstützung (10) im Wesentlichen vertikal in dem Frachtraum (3) erstreckt, wenn der Ständer bzw. die Abstützung (10) in besagter zweiter Position ist.

15. Transportvorrichtung gemäß einem der vorhergehenden Ansprüche, enthaltend einen oder mehrere Hubständer bzw. Hubabstützungen (20'), welche konfiguriert sind, um die Unterseite des Platten- bzw. Tafelmaterials (C) zu tragen bzw. zu stützen, insbesondere wenn das Material wenigstens an und/oder nahe eines bzw. einer oberen durch besagten wenigstens einen Frachtständer bzw. Frachtabstützung (10) getragen bzw. gestützt wird, wenn der Frachtständer bzw. die Frachtabstützung in seiner bzw. ihrer zweiten Position ist, wobei der eine oder mehrere Hubständer bzw. Hubabstützungen (20') konfiguriert sind, um das Platten- bzw. Tafelmaterial (C) zwischen wenigstens einer ersten vertikalen Position und einer zweiten vertikalen Position zu bewegen, z.B. zwischen einer unteren Transportposition und einer oberen Belade/Entladeposition.

16. Transportvorrichtung gemäß einem der vorhergehenden Ansprüche, enthaltend eine Abdeckung, welche angeordnet ist, um den Frachtraum abzudecken, wobei die Abdeckung bevorzugt wenigstens teilweise von Hand durch eine einzige Person entfernbar ist.

17. Transportvorrichtung gemäß einem der vorhergehenden Ansprüche, wobei sich das Frachtständerglied bzw. Frachtabstützungsglied (10) im Wesentlichen zwischen zwei parallelen Chassisbalken (9) eines Basisrahmens bzw. Basisgerüsts der Transportvorrichtung erstreckt, wenn das Ständerglied bzw. Abstützungsglied (10) in der ersten Position ist, wobei bevorzugt ein Lagerraum zwischen den Chassisbalken (9) vorgesehen ist, z.B. ein Lagerraum zum Lagern wenigstens eines Teils (11) des Betätigungsmechanismuses oder zum Halten eines unteren Teils der Platten- bzw. Tafelfracht (C) während der Benutzung.

18. Vorrichtung gemäß einem der vorhergehenden Ansprüche, wobei Tafeln bzw. Platten z.B. Glastafeln bzw. Glasplatten nächst dem wenigstens einen Frachtständer bzw. Frachtabstützung positioniert werden können, um wenigstens teilweise **dadurch** während des Transports getragen bzw. gestützt zu werden, wenn der Ständer bzw. die Abstützung in seiner bzw. ihrer zweiten Position ist.

19. Verwendung von einer Transportvorrichtung gemäß einem der vorhergehenden Ansprüche, wobei sich während einer ersten Verwendungsdauer der wenigstens eine Frachtständer bzw. Frachtabstützung automatisch in seine bzw. ihre zweite Position bewegt hat, um direkt oder indirekt tafel- bzw. plattenförmige Fracht zu tragen bzw. zu stützen, z.B. Floatglas bzw. Flachglas, wobei während einer zweiten Verwendungsdauer der wenigstens eine Frachtständer bzw. Frachtabstützung automatisch in seine bzw. ihre erste Position bewegt worden ist, um einen im Wesentlichen horizontalen Frachtraumboden vorzusehen, um Fracht zu tragen bzw. zu stützen,

20. Verfahren zum Transportieren von Fracht, z.B. Floatglas bzw. Flachglas, wobei eine Transportvorrichtung gemäß einem der Ansprüche 1 bis 18 verwendet wird.

## Revendications

1. Appareil de transport configuré pour transporter des matériaux en plaques, comprenant au moins :
- un espace de chargement (3) ;
- au moins un support de chargement (10), ledit au moins un support de chargement définissant au moins une partie d'un plancher (F) de l'espace de chargement lorsque le support est dans une première position, sensiblement horizontale,
dans lequel ledit au moins un support de chargement est mobile entre la première position et une seconde position,
**caractérisé en ce que** le au moins un support s'étend dans l'espace de chargement (3), à une certaine distance verticale du niveau de ladite première position lorsque le support (10) se trouve dans sa seconde position ; et
- un mécanisme d'actionnement (11, 12) conçu pour déplacer automatiquement le au moins un support de chargement entre la première et la seconde position.

2. Appareil de transport selon la revendication 1, dans lequel ledit mécanisme d'actionnement comprend au moins un cadre (11) mobile entre une première position située sous l'espace de chargement (3) et une seconde position dans laquelle au moins une partie du cadre s'étend dans l'espace de chargement.

3. Appareil de transport selon la revendication 2, dans lequel chaque cadre mobile (11) s'étend sensiblement parallèlement à une direction longitudinale (L) de l'espace de chargement lorsque ledit cadre mobile (11) se trouve dans la première position.

4. Appareil de transport selon la revendication 2 ou la revendication 3, dans lequel chacun desdits cadres mobiles (11) est monté avec capacité de pivotement autour d'un premier axe de pivotement associé (X1) entre sa première position et sa seconde position.

5. Appareil de transport selon l'une quelconque des revendications 2 à 4, dans lequel ledit au moins un support de chargement (10) est raccordé avec capacité de pivotement à ou près d'une extrémité dudit cadre mobile (11).

6. Appareil de transport selon la revendication 5, dans lequel le raccordement pivotant entre chacun desdits supports de chargement (10) et ledit cadre mobile (11) est assuré par un second axe de pivotement (X2), chacun desdits seconds axes de pivotement s'étendant sensiblement parallèlement audit premier axe de pivotement (X1), le raccordement pivotant entre chacun desdits supports de chargement (10) et ledit cadre mobile (11) étant de préférence également assuré par un troisième axe de pivotement (X3), chacun desdits troisièmes axes de pivotement s'étendant sensiblement transversalement par rapport audit premier axe de pivotement.

7. Appareil de transport selon l'une quelconque des revendications 2 à 6, dans lequel chaque cadre mobile (11) comprend une surface support qui s'étend sensiblement dans l'alignement d'une surface support dudit support de chargement (10) lorsque le support de chargement (10) et le cadre mobile (11) se trouvent dans leur seconde position.

8. Appareil de transport selon l'une quelconque des revendications précédentes, dans lequel chaque mécanisme d'actionnement comprend uniquement un ensemble piston/cylindre (12) pour déplacer ledit au moins un support de chargement (10) entre ladite première position et ladite seconde position.

9. Appareil de transport selon l'une quelconque des revendications précédentes, dans lequel une extrémité inférieure du au moins un support de chargement (10) s'étend au moins 1 m au dessus du niveau de ladite première position dudit support (10) lorsque ledit support (10) se trouve dans sa seconde position.

10. Appareil de transport selon l'une quelconque des revendications précédentes, dans lequel ledit au moins un support de chargement (10) s'étend sensiblement parallèlement à une direction longitudinale (L) de l'espace de chargement lorsque le support de chargement se trouve dans sa seconde position.

11. Appareil de transport selon l'une quelconque des revendications précédentes, dans lequel au moins une partie dudit mécanisme d'actionnement (11, 12) est recouverte par ledit support de chargement (10) lorsque celui-ci se trouve dans sa première position.

12. Appareil de transport selon l'unè quelconque des revendications précédentes, comprenant au moins un élément de plancher mobile (15), mobile entre une position plancher et une position sensiblement verticale, l'élément de plancher s'étendant de préférence sensiblement transversalement par rapport à la direction longitudinale de l'espace de chargement lorsque ledit élément de plancher (15) se trouve dans ladite position sensiblement verticale.

13. Appareil de transport selon la revendication 12, dans lequel ledit élément de plancher mobile (15) est agencé pour faire office d'organe d'arrêt pour soutenir le chargement, le ou lesdits support(s) de chargement et/ou une ou plusieurs parties dudit mécanisme d'actionnement lorsque ledit élément de plancher (15) se trouve dans sa position sensiblement verticale.

14. Appareil de transport selon l'une quelconque des revendications précédentes, dans lequel au moins un support de chargement (10) s'étend sensiblement verticalement dans l'espace de chargement (3) lorsque ce support (10) se trouve dans ladite seconde position.

15. Appareil de transport selon l'une quelconque des revendications précédentes, comprenant un ou plusieurs supports de levage (20') qui sont configurés pour supporter le côté inférieur du matériau en plaque (C), notamment lorsque ce matériau est au moins soutenu au niveau ou près d'une partie haute par ledit au moins un support de chargement (10) lorsque ce support de chargement se trouve dans sa seconde position, le ou les supports de levage (20') étant configurés pour déplacer le matériau en plaque (C) entre au moins une première position verticale et une seconde position verticale, par exemple entre une position inférieure de transport et une position supérieure de chargement/déchargement.

16. Appareil de transport selon l'une quelconque des revendications précédentes, comprenant un dispositif de recouvrement agencé pour recouvrir ledit espace de chargement, le dispositif de recouvrement pouvant de préférence au moins partiellement être retiré à la main par une personne seule.

17. Appareil de transport selon l'une quelconque des revendications précédentes, dans lequel ledit élément support de chargement (10) s'étend sensiblement entre deux longerons de châssis parallèles d'un cadre de base de l'appareil de transport lorsque l'élément support (10) se trouve dans la première position, un espace de stockage étant de préférence offert entre lesdits longerons de châssis (9), par exemple un espace de stockage destiné à recevoir au moins une partie (11) dudit mécanisme d'actionnement ou maintenir une partie inférieure du chargement en plaque (C) durant l'utilisation.

18. Appareil selon l'une quelconque des revendications précédentes, dans lequel des panneaux, par exemple des panneaux de verre, peuvent être positionnés près du au moins un support de chargement pour être au moins partiellement supportés par celui ou ceux-ci pendant le transport, lorsque le support se trouve dans sa seconde position.

19. Utilisation d'un appareil de transport selon l'une quelconque des revendications précédentes, dans lequel, pendant une première période d'utilisation, le au moins un support de chargement est passé automatiquement dans sa seconde position pour supporter directement ou indirectement le chargement en forme de plaque, par exemple du verre flotté, et dans lequel, pendant une seconde période d'utilisation, le au moins un support de chargement est passé automatiquement en première position pour offrir un plancher d'espace de chargement sensiblement horizontal pour supporter le chargement.

20. Procédé de transport de chargement, par exemple de verre flotté, mettant en oeuvre un appareil de transport selon l'une quelconque des revendications 1 à 18.
